# EUROPÄISCHE PATENTSCHRIFT

(11) **EP 1 376 793 B1**
(45) Veröffentlichungstag und Bekanntmachung des Hinweises auf die Patenterteilung: **28.04.2010**
(21) Anmeldenummer: 03013689.9
(22) Anmeldetag: 17.06.2003
(51) Int. Cl.: H02B 1/052

(54) **Adapter für die Installation von Anschlussleisten-modulen in elektrischen Verteilereinrichtungen**
Adapter for the installation of terminal blocks in electric distribution devices
Adaptateur pour l'installation de blocs de connection dans des dispositifs de distribution électrique

(30) Priorität: 25.06.2002 DE 10228418
(43) Veröffentlichungstag der Anmeldung: 02.01.2004
(73) Patentinhaber: Hager Electro GmbH & Co. KG, 66440 Blieskastel (DE)
(72) Erfinder: Dissel, Klaus, 66131 Saarbrücken (DE); Gaa, Holger, 66265 Heusweiler (DE); Gros, Bernhard, 57455 Seinbouse (FR)
(74) Vertreter: Bernhardt, Winfrid

(56) Entgegenhaltungen:
- EP-A- 0 610 710
- DE-U- 29 706 755
- FR-A- 2 118 911

## Beschreibung

Die Erfindung betrifft einen Adapter für die Installation von Anschlussleistenmodulen in elektrischen Verteilereinrichtungen, wobei der Adapter Einrichtungen zur Verbindung mit wenigstens einem solchen Modul sowie Einrichtungen zur Verbindung mit einer Hutprofilträgerschiene aufweist, welche an den einander gegenüberliegenden Längsrändern der Hutprofilträgerschiene elastisch einrastende Hakenelemente umfasst.

Adapter solcher Art gehen aus der EP 0 610 710 A1 sowie der DE 297 06 755 U1 hervor. Die erstgenannte Druckschrift beschreibt zwei U-förmige, einen Modul aufnehmende Adapterteile, die gegen den Modul in ihrer Gesamtheit durch Federelemente unter Einrastung der Hakenelemente an der Hutprofilträgerschiene verschiebbar sind. Der aus der DE 297 06 755 U1 bekannte Adapter umfasst eine an der Hutprofilträgerschiene einrastbare Trägerplatte, die mit einem den Modul tragenden Haltebügel verschraubt ist, wobei sich der Haltebügel an der Trägerplatte in verschiedenen Stellungen befestigen lässt.

Aus der DE 199 45 817 A1 ist es bekannt, Anschlussleisten für elektrische Verteilereinrichtungen, insbesondere PE/N-Anschlussleisten aus Modulen zusammenzusetzen, die mit einer gemeinsamen Trägerleiste verbunden sind, welche an ihren Enden an Trägerböcken, die z.B. vom Boden eines Verteilerkastens vorstehen, gehalten ist.

Der vorliegenden Erfindung liegt die Aufgabe zugrunde, die Einsatzmöglichkeiten solcher, zur Bildung von Anschlussleisten verwendeter Anschlussleistenmodule zu erweitern.

Diese Aufgabe wird durch einen Adapter der eingangs erwähnten Art gelöst, der dadurch gekennzeichnet ist, dass der Adapter als Adapterleiste in der Form eines länglichen Winkelprofils ausgebildet ist und die elastisch einrastenden Hakenelemente zum Einrasten der Adapterleiste an den Längsrändern der Hutprofilträgerschiene sowohl parallel als auch quer zur Hutprofiltrögerschiene vorgesehen sind.

Vorteilhaft ergeben sich durch diese Erfindungslösung Variationsmöglichkeiten in bezug auf die Installation von Anschlussleistenmodulen bzw. daraus gebildeten Anschlussleisten. Letztlich lässt sich hierdurch der in Verteilereinrichtungen zur Verfügung stehende Bauraum besser nutzen.

Der Adapter kann ferner Einrichtungen zur wahlweisen Verbindung mit wenigstens einem weiteren zu der Hutprofilträgerschiene unterschiedlichen, in Verteilereinrichtungen verwendeten Trägerelement aufweisen.

Vorzugsweise handelt es sich bei dem weiteren Trägerelement um eine Trägerschiene oder eine Trägerplatte. Solche Trägerelemente werden in Verteilereinrichtungen neben Hutprofilträgerschienen üblicherweise als Bauteilträger eingesetzt.

Durch die elastisch einrastenden Hakenelemente lässt sich bequem mit geringem Arbeitsaufwand eine Verbindung zwischen dem Adapter und dem betreffenden Trägerelement herstellen.

An der Trägerplatte lässt sich der Adapter zweckmäßig mit Hilfe vorstehender Dome anbringen, die eine Bodenöffnung für eine Schraubverbindung mit der Trägerplatte aufweisen.

In weiterer Ausgestaltung der Erfindung weisen die Verbindungseinrichtungen des Adapters Verbindungselemente auf, die im Rahmen der Verbindung des Adapters mit unterschiedlichen Trägerelementen oder/und mit einem Trägerelement in dazu unterschiedlichen Anordnungen mehrfach nutzbar sind. Vorteilhaft kann so der zur Herstellung der Verbindungseinrichtungen erforderliche Aufwand verringert werden.

Die Adapterleiste kann mit Sollbruchstellen zur Anpassung der Leistenlänge an unterschiedliche Längen von Anschlussleistenmodulen versehen sein.

Vorzugsweise bilden die Innenseiten des Winkelprofils einen Sitz für den Anschlussleistenmodul, wobei der Modul z.B. auf einen der Winkelschenkel über eine an seinem Gehäuse seitlich angebrachte Klemme unter Einrastung an dem Winkelschenkel aufsteckbar ist und zur formschlüssigen Halterung an der Leiste ferner mit einem Gehäusevorsprung in eine Ausnehmung in dem anderen Winkelschenkel eingreift.

An einem der Schenkel des Winkelprofils können die obengenannten Dome für die Schraubverbindung mit der Trägerplatte gebildet sein, während an dem anderen Schenkel die erwähnten elastisch einrastenden Formschlussverbindungselemente angebracht sind.

Zur Stabilisierung können die beiden zueinander im Winkel stehenden Leistenschenkel an den Leistenenden durch einen Quersteg verbunden sein. Zweckmäßig bleibt das Winkelprofil an den Enden jedoch offen und schließt gar bündig mit dem Anschlussleistenmodul ab. Die Leisten können dann unter unmittelbarer Aneinanderreihung der Anschlussleistenmodule aneinandergesetzt und zur elektrischen Verbindung der Module für unmittelbare Aneinanderreihung der Module bemessene Verbindungsbrücken verwendet werden.

Zweckmäßig sind die Dome nahe oder auf der Längsmittellinie des betreffenden Schenkels angeordnet. Bei paralleler Anbringung der Adapterleiste auf einer Hutprofilschiene finden die Dome dann innerhalb des Hutprofils Platz.

In weiterer vorteilhafter Ausgestaltung der Erfindung sind die elastisch einrastenden Formschlussverbindungselemente in der Art eines Kipphebels mit einer die Trägerschiene hintergreifenden Rastnase an einem Hebelarmende ausgebildet. Der Kipphebel, der z.B. in seiner Längsmitte über elastisch verbiegbare Stege mit einem der Winkelschenkel verbunden sein kann, lässt sich durch Kraftausübung auf das der Rastnqse entgegengesetzte Hebelende aus seiner Verhakung mit der Trägerschiene lösen.

Zweckmäßig ist die Rastnase zur Anpassung an unterschiedliche Trägerschienendicken stufenförmig ausgebildet.

Vorteifhaft sind darüber hinaus Anschläge für die Anlage gegen eine Seitenfläche der Trägerschiene vorgesehen, welche eine Verschiebung der Adapterleiste quer zur Trägerschiene verhindern. Die Lösung der Formschlussverbindung zwischen Adapterleiste und Trägerschiene kann dann nur durch Betätigung des Kipphebel-Formschlussverbindungselements gelöst werden, wie oben beschrieben.

In der bevorzugten Ausführungsform sind Verbindungseinrichtungen zur Verbindung der Adapterleiste mit einer Trägerschiene in einer Anordnung sowohl längs als auch quer dazu gebildet.

Zur Verbindung der Adapterleiste in Querstellung mit der Trägerschiene kann eine elastische Rastlippe vorgesehen und in der Leiste eine Öffnung zur Einführung eines Werkzeugs zum Lösen der Rastverbindung durch Verbiegung der Rastlippe gebildet sein. Zweckmäßig ragt ein freies Ende der Rastlippe für das Werkzeug leicht zugänglich in die Öffnung hinein.

Die Erfindung soll nun anhand eines Ausführungsbeispiels und der beiliegenden, sich auf dieses Ausführungsbeispiel beziehenden Zeichnungen näher erläutert werden. Es zeigen:
- Fig. 1: einen Adapter nach der Erfindung in einer perspektivischen Ansicht,
- Fig. 2: den Adapter von Fig. 1 in einer zu der Ansicht von Fig. 1 entgegengesetzten perspektivischen Ansicht,
- Fig. 3: den Adapter von Fig. 1 in verschiedenen Befestigungspositionen an einer Hutschiene in einer perspektivischen Ansicht,
- Fig. 4: die Hutschiene mit dem Adapter gemäß Fig. 3 in einer zu der Ansicht von Fig. 3 entgegengesetzten perspektivischen Ansicht,
- Fig. 5: über Adapter gemäß Fig. 1 an einer Hutschiene angebrachte Klemmanschlussmodule für die Bildung einer Klemmleiste,
- Fig. 6: den Adapter von Fig. 1 in Verbindung mit einer Trägerplatte,
- Fig. 7: den Adapter von Fig. 1 in Verbindung mit einer Trägerschiene in einer perspektivischen Ansicht, und
- Fig. 8: die Trägerschiene mit dem Adapter gemäß Fig. 7 in einer zu der Ansicht von Fig. 7 entgegengesetzten perspektivischen Ansicht.

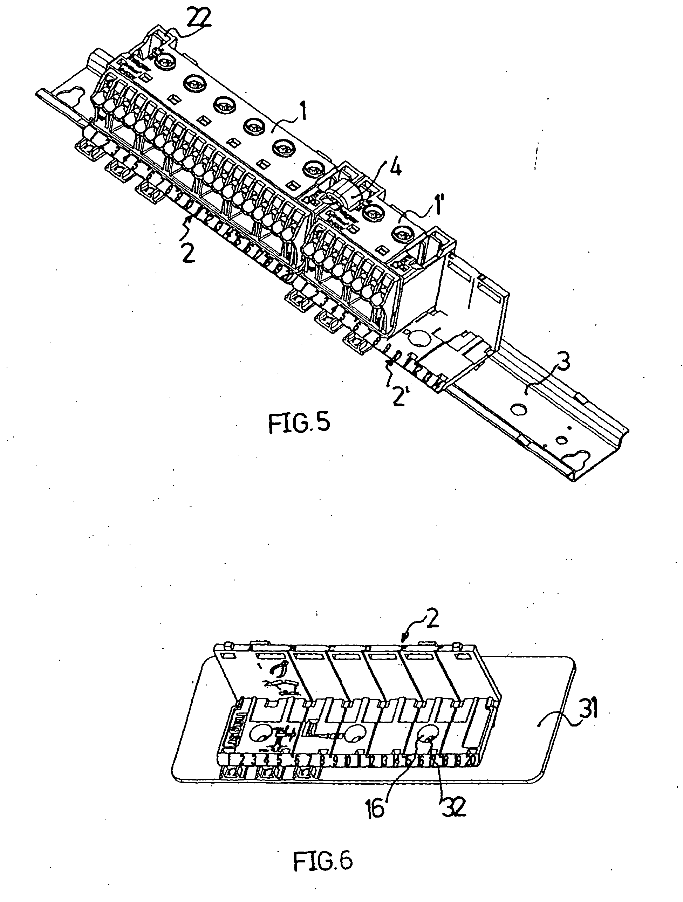

Es wird zunächst auf Fig. 5 Bezug genommen, aus welcher Klemmanschlussleistenmodule 1 und 1 ' hervorgehen, welche über Adapterleisten 2 und 2' mit einer Hutprotilschiene 3 verbunden sind. Die auf die Adapterleisten aufgesteckten, über eine Brücke 4 elektrisch miteinander verbundenen Klemmanschlussleistenmodule 1,1 ' sind in der hier inhaltlich einbezogenen DE 199 45 817 A1 beschrieben. Auf diese Module wird daher nicht weiter eingegangen.

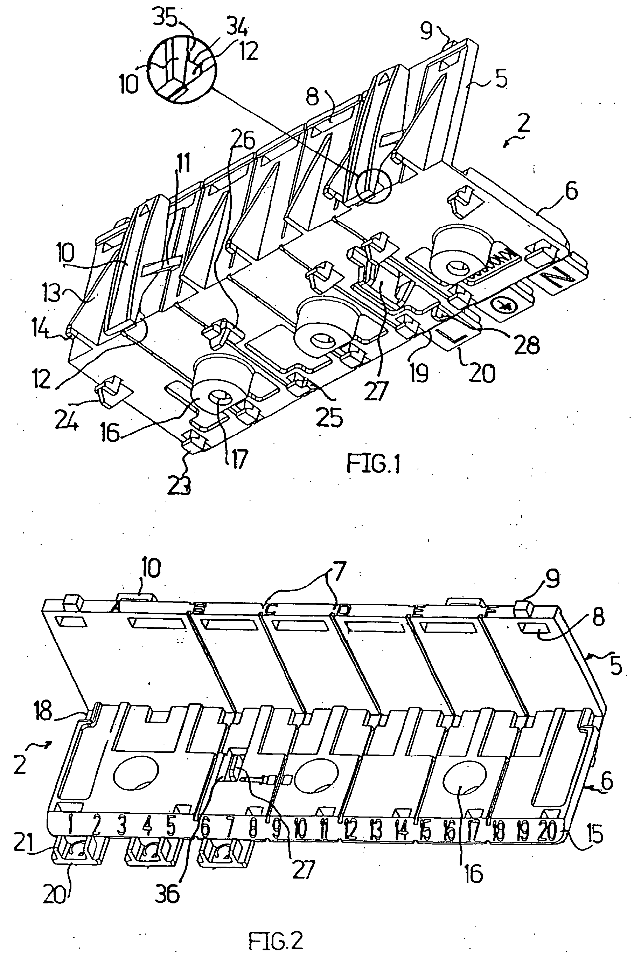

Wie insbesondere aus den Fig. 1 und 2 hervorgeht, ist die Adapterleiste 2 in ihren groben Umrissen als Winkelprofil mit einem Schenkel 5 und einem dazu um 90° abgewinkelten Schenkel 6 ausgebildet. Die Adapterleiste 2 weist in dem betreffenden Ausführungsbeispiel fünf Sollbruchstellen 7 auf, welche durch einander gegenüberliegende Rillen auf beiden Schenkelseiten gebildet sind, die sich quer sowohl über den Schenkel 5 als auch den Schenkel 6 erstrecken.

Am freien Längsrand des Schenkels 5 sind Öffnungen 8 für den Eingriff von Rastnasen eines aufzusteckenden Klemmanschlussleistenmoduls gebildet, wobei in dem betrachteten Ausführungsbeispiel sieben solche Öffnungen vorgesehen sind. Zwei an den Längsenden des Schenkels 5 angeordnete Vorsprünge 9 dienen als seitliche Befestigungsanschläge für den Modul.

An dem Schenkel 5 sind außenseitig zwei in der Art eines Kipphebels verschwenkbare Rastelemente 10 angebracht, die durch Verbindungsstege 11 elastisch mit dem Schenkel 5 verbunden sind. Die beiden Rastelemente 10 weisen jeweils an einem Ende eine Rastnase 12 auf. Die Rastnase 12 ist stufenförmig mit einer ersten Stufe 34 und einer zweiten Stufe 35 ausgebildet.
Im Rasterabstand der Sollbruchstellen sind an dem Schenkel 5 außenseitig ferner Stege 13 in Dreieckform angebracht. Einige dieser Stege weisen eine Anschlagnase 14 an einer freien Dreiecksecke auf.

Der Schenkel 6 ist an seinem freien, der Abwinklung gegenüberliegenden Längsrand mit einer Abschrägung 15 versehen, die eine Numerierungsbeschriftung trägt. Von dem Schenkel 6 stehen außenseitig ferner drei Dome 16 mit einer Bodenöffnung 17 vor.

Innenseitig weist der Schenkel 6 an seinem dem Schenkel 5 zugewandten Längsrand Ausnehmungen 18 für den Eingriff einer Nase am Gehäuse eines auf die Adapterleiste aufsteckbaren Klemmanschlussleistenmoduls auf. Beim Trennen der Leiste an einer Sollbruchstelle entstehen weitere solche nach zwei Seiten hin offene Ausnehmungen 18.

An den freien Längsrand der Schräge 15 schließen sich über Sollbruchstellen 19 mit Kennzeichnungssymbolen beschriftete Tafeln 20 mit Steckfüßen 21 an, welche in Öffnungen 22 an den Klemmanschlussleistenmodulen 1,1 ' einsteckbar sind (Fig. 5). Zweckmäßig sind die Tafeln 20 so an der Adapterleiste angebracht, dass die Kennzeichnungssymbole nicht sichtbar sind, wenn von den Tafeln kein Gebrauch gemacht wird und diese an der Leiste verbleiben.

Ferner sind an dem Schenkel 6 außenseitig am freien Längsrand in dem betreffenden Ausführungsbeispiel sieben hakenförmig ausgebildete Verbindungselemente 23 vorgesehen. Weitere derartige Hakenverbindungselemente 24 sind zwischen dem freien Längsrand und der Abwinklung in einer zum Längsrand bzw. der Abwinklung parallelen Reihe angeordnet.

Eines der Hakenverbindungselemente 23 und eines der Hakenverbindungselemente 24 weist jeweils einen zusätzlichen Hakenteil 25 bzw. 26 auf, welcher in Längsrichtung der Adapterleiste vorsteht. Den Hakenteilen gegenüberliegend sind eine elastische, gebogene Rastlippe 27 und ein Anschlag 28 gebildet. Das freie Ende der gebogenen Rastlippe 27 ragt in eine im Schenkel 6 gebildete Öffnung 36 hinein.

Im übrigen weist der Schenkel 6 zahlreiche Einsenkungen zur Vermeidung von Materialhäufungen auf.

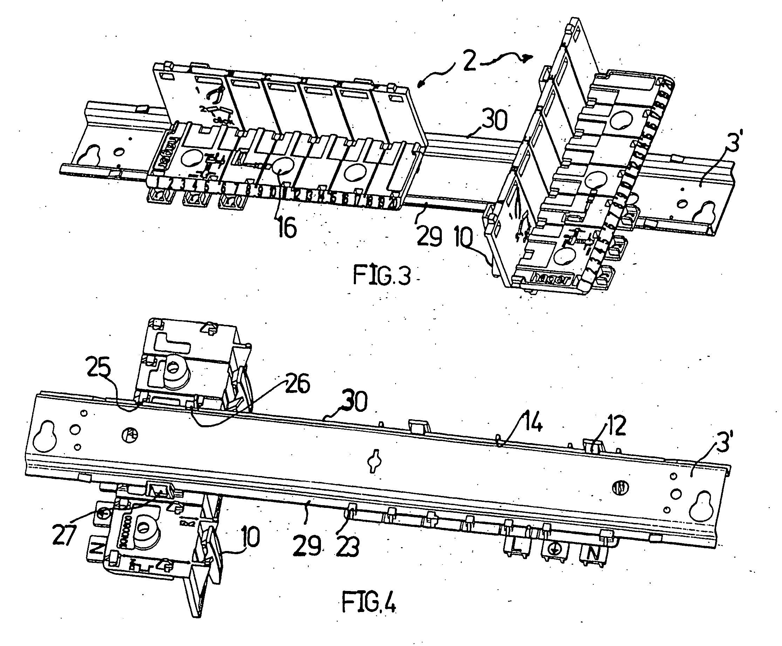

Im folgenden wird die Funktionsweise der vorangehend beschriebenen Adapterleiste anhand der Fig. 3 bis 8 erläutert.

Wie aus Fig. 3 und 4 hervorgeht, lässt sich die Adapterleiste 2 sowohl parallel als auch quer zur Längsrichtung einer Hutprofilschiene 3' anbringen. Bei der parallelen Anbringung hintergreifen die Hakenverbindungselemente 23 eine Hutkrempe 29 des Hutprofils, wenn die Adapterleiste etwas angekippt auf die Hutprofilschiene 3' aufgesetzt und quer dazu verschoben wird. Bei nachfolgender Drehung unter Aufhebung der Kippstellung rasten die mit einer Schräge versehenen Rastnasen 12 der Rastelemente 10 mit ihrer Stufe 35 hinter einer der Hutkrempe 29 gegenüberliegenden Hutkrempe 30 des Hutprofils ein. Gleichzeitig kommen die Anschlagnasen 14 der Stege 13 zur Anlage gegen die Randfläche der Hutkrempe 30 und die Stege 13 sitzen auf der Hutkrempe 30 auf. Eine Querverschiebung der Adapterleiste 2 unter Lösung der Rastelemente 10 aus der Verhakungsstellung ist durch die Anschlagnasen 14 ausgeschlossen.

Zum Lösen der Adapterleiste 2 von der Hutprofilschiene 3' werden die Rastelemente 10 durch Ausübung einer Druckkraft auf das der Rastnase 12 entgegengesetzte Hebelende unter Verbiegung der Verbindungsstege 11 gekippt und dadurch die Rastnase 12 aus dem Verhakungseingriff mit der Krempe 30 gebracht. Die Adapterleiste 2 lässt sich nun wieder ankippen und unter Lösung der Verhakungen mit den Hakenverbindungselementen 23 von der Hutprofilschiene 3' abnehmen.

Bei der gezeigten Querbefestigung kommen die Hakenteile 25 und 26, die gebogene Rastlippe 27 sowie der Anschlag 28 zum Einsatz, wie dies aus Fig. 4 hervorgeht. Bei Querbewegung der leicht angekippten Adapterleiste übergreifen die Hakenteile 25 und 26 die Krempe 30 der Hutprofilschiene 3'. Nach einer Drehung der Leiste rastet dann die Lippe 27 an der Hutkrempe 29 ein.

Zur Lösung der Rastverbindung lässt sich die elastische Rastlippe 27 durch ein in die Öffnung 36 eingreifendes Werkzeug verbiegen.

Wie Fig. 5 zeigt, können zur Bildung einer längeren Anschlussleiste auf der Hutprofilschiene 3 mehrere Adapterleisten 2 und 2' aneinandergereiht und auf die aneinandergereihten Adapterleisten Klemmanschlussleistenmodule 1 und 1' aufgesteckt werden. indem die Klemmanschlussleistenmodule bündig mit dem Längsende der Adapterleiste abschließen, liegen sie auch innerhalb der längeren Anschlussleiste unmittelbar aneinander an und können über für diesen Fall vorgesehene Standardbrücken elektrisch miteinander verbunden werden.

Es wird nun auf Fig. 6 Bezug genommen, wo die Adapterleiste 2 in Verbindung mit einer Trägerplatte 31 gezeigt ist. Die in einer elektrischen Verteilereinrichtung installierbare Trägerplatte 31 weist Bohrungen für eine Schraubverbindung auf, wobei Befestigungsschrauben 32 durch die Bodenöffnungen 17 in den Domen 16 geführt sind. Die Dome 16; deren Höhe größer als alle zur Bildung der Hakenverbindungselemente von dem Schenkel 6 vorstehenden Teile ist, sitzen mit ihren Böden auf der Trägerplatte 31 auf.

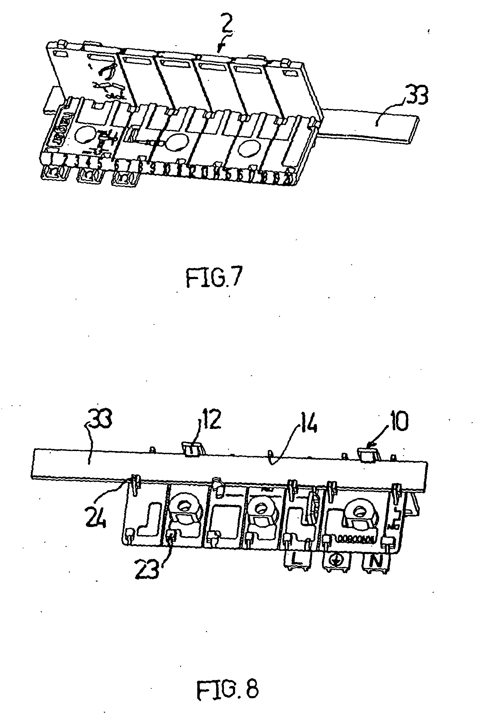

Fig. 7 und 8 zeigen eine weitere Befestigungsmöglichkeit auf einem in einer Verteilereinrichtung installierbaren Trägerelement, das in dem betreffenden Fall durch eine flache Trägerschiene 33 mit rechteckigem Querschnitt gebildet ist.

Wie insbesondere aus Fig. 8 hervorgeht, kommen bei der Befestigung der Adapterleiste 2 an der Trägerschiene 33 neben den Rastnasen 12 und den Anschlagnasen 14 die Hakenverbindungselemente 24 zum Einsatz, welche den Rand der Trägerschiene 33 übergreifen. Wegen der größeren Dicke der Schiene 33 gegenüber der Krempendicke der Hutprofilschiene 3' rasten die Nasen 12 mit ihrer Stufe 34 ein.

## Patentansprüche

1. Adapter für die Installation von Anschlussmodulen (1) in elektrischen Verteilereinrichtungen, wobei der Adapter (2) Einrichtungen zur Verbindung mit wenigstens einem solchen Modul (1) sowie Einrichtungen zur Verbindung mit einer Hutprofilträgerschiene (3) aufweist, welche an den einander gegenüberliegenden Längsrändern der Hutprofilträgerschiene (3) elastisch einrastende Hakenelemente umfassen,
**dadurch gekennzeichnet,**
**dass** der Adapter als Adapterleiste (2) in der Form eines länglichen Winkelprofils ausgebildet ist, und dass elastisch einrastende Hakenelemente (10,12,24-27) zum Einrasten der Adapterleiste (2) an den Längsrändern der Hutprofilträgerschiene (3) sowohl parallel als auch quer zur Hutprofilträgerschiene (3) vorgesehen sind.

2. Adapter nach Anspruch 1,
**dadurch gekennzeichnet,**
**dass** der Adapter (2) ferner Einrichtungen zur wahlweisen Verbindung mit wenigstens einem weiteren zu der Hutprofilträgerschiene (3) unterschiedlichen, in Verteilereinrichtungen verwendeten Trägerelement (31,33) aufweist.

3. Adapter nach Anspruch 2,
**dadurch gekennzeichnet,**
**dass** das weitere Trägerelement eine Trägerschiene (33) oder eine Trägerplatte (31) ist.

4. Adapter nach Anspruch 3,
**dadurch gekennzeichnet,**
**dass** die Verbindungseinrichtungen von dem Adapter (2) vorstehende Dome (16) mit einer Bodenöffnung (17) für eine Schraubverbindung des Adapters (2) mit der Trägerplatte (31) aufweisen.

5. Adapter nach einem der Ansprüche 1 bis 4,
**dadurch gekennzeichnet,**
**dass** die Verbindungseinrichtungen Verbindungselemente (10,12;23,25;24,26) aufweisen, die im Rahmen der Verbindung des Adapters (2) mit unterschiedlichen Trägerelementen (3;33) oder/und mit einem Trägerelement (3) in zu den Trägerelement (3) unterschiedlichen Anordnungen mehrfach nutzbar sind.

6. Adapter nach einem der Ansprüche 1 bis 5,
**dadurch gekennzeichnet,**
**dass** die Adapterleiste (2) für die Bildung einer wenigstens einen Anschlussleistenmodul (1,1') aufweisenden Klemmanschlussleiste ausgebildet ist.

7. Adapter nach Anspruch 6,
**dadurch gekennzeichnet,**
**dass** die Adapterleiste (2) Sollbruchstellen (7) zur Anpassung der Leistenlänge an unterschiedliche Längen von Anschlussleistenmodulen (1') aufweist.

8. Adapter nach einem der Ansprüche 4 bis 7,
**dadurch gekennzeichnet,**
**dass** mit einem Schenkel (6) des Winkelprofils die Dome (16) und mit einem anderen Schenkel (5) die elastisch einrastenden Hakenelemente (10,12) verbunden sind.

9. Adapter nach Anspruch 8,
**dadurch gekennzeichnet,**
**dass** die Dome (16) auf der Längsmittellinie des betreffenden Schenkels (6) angeordnet sind.

10. Adapter nach Anspruch 8 oder 9,
**dadurch gekennzeichnet,**
**dass** die elastisch einrastenden Hakenelemente (10,12) in der Art eines Kipphebels mit einer die Trägerschiene (3;33) hintergreifenden Rastnase (12) an einem Hebelarmende ausgebildet sind.

11. Adapter nach Anspruch 10,
**dadurch gekennzeichnet,**
**dass** die an dem Hebelarmende gebildete Rastnase (12) zur Anpassung an unterschiedliche Dicken von Trägerschienen (3;33) stufenförmig ausgebildet ist.

12. Adapter nach einem der Ansprüche 1 bis 11,
**dadurch gekennzeichnet,**
**dass** Anschläge (14) vorgesehen sind, welche eine Verschiebung der Adapterleiste (2) quer zur Trägerschiene (3;33) unter Lösung der Rastverbindung durch die elastisch einrastenden Hakenelemente (10,12) entgegen der Einrastrichtung verhindern.

13. Adapter nach einem der Ansprüche 1 bis 12,
**dadurch gekennzeichnet,**
**dass** zur Verbindung der Adapterleiste (2) in Querstellung mit der Trägerschiene (3') eine Rastlippe (27) vorgesehen und in der Adapterleiste (2) eine Öffnung (36) zum Einführen eines Werkzeugs zum Lösen der Rastverbindung durch Verbiegung der Rastlippe (27) gebildet ist.

14. Adapter nach Anspruch 13,
**dadurch gekennzeichnet,**
**dass** ein freies Ende der Rastlippe (27) in die Öffnung (36) hineinragt.

15. Adapter nach einem der Ansprüche 7 bis 14,
**dadurch gekennzeichnet,**
**dass** die Adapterleiste (2) an wenigstens einem Längsende bündig mit dem Anschlussleistenmodul (1) abschließt.

## Claims

1. Adapter for the installation of connecting modules (1) in electrical distribution devices, wherein the adapter (2) has devices for connection to at least one such module (1) as well as devices for connection to a top-hat profile mounting rail (3), which comprise hook elements which latch in elastically on the mutually opposite longitudinal edges of the top-hat profile mounting rail (3),
**characterized in that**
the adapter is an adapter strip (2)in the form of an elongate angled profile, and **in that** hook elements (10, 12, 24-27), which latch in elastically, for latching the adapter strip (2) in, are provided on the longitudinal edges of the top-hat profile mounting rail (3), both parallel to and transversely with respect to the top-hat profile mounting rail (3).

2. Adapter according to Claim 1,
**characterized in that**
the adapter (2) furthermore has devices for selective connection to at least one further mounting element (31, 33) which is not the same as the top-hat profile mounting rail (3) and is used in distribution devices.

3. Adapter according to Claim 2.
**characterized in that**
the further mounting element is a mounting rail (33) or a mounting plate (31).

4. Adapter according to Claim 3,
**characterized in that**
the connection devices have domes (16), which project from the adapter (2)and have a bottom opening (17) for a screw connection of the adapter (2) to the mounting plate (31).

5. Adapter according to one of Claims 1 to 4,
**characterized in that**
the connection devices have connection elements (10, 12; 23, 25; 24, 26) which can be used more than once in the course of connection of the adapter (2) to different mounting elements (3; 33) and/or to a mounting element (3), in arrangements which differ from the mounting element (3).

6. Adapter according to one of Claims 1 to 5,
**characterized in that**
the adapter strip (2) is designed to form a terminal connecting strip which has at least one connecting strip module (1, 1').

7. Adapter according to Claim 6,
**characterized in that**
the adapter strip (2) has weak points (7) in order to match the strip length to different lengths of connecting strip modules (1').

8. Adapter according to one of Claims 4 to 7,
**characterized in that**
the domes (16) are connected to a limb (6) of the angled profile, and the hook elements (10, 12) which latch in elastically are connected to another limb (5).

9. Adapter according to Claim 8,
**characterized in that**
the domes (16) are arranged on the longitudinal centre line of the relevant limb (6).

10. Adapter according to Claim 8 or 9,
**characterized in that**
the hook elements (10, 12) which latch in elastically are in the form of a toggle lever having a latching tab (12), which engages behind the mounting rail (3; 33), at one lever arm end.

11. Adapter according to Claim 10,
**characterized in that**
the latching tab (12) which is formed at the lever arm end is stepped for matching to different thicknesses of mounting rails (3; 33).

12. Adapter according to one of Claims 1 to 11,
**characterized in that**
stops (14) are provided, which prevent the adapter strip (2) from being moved transversely with respect to the mounting rail (3; 33), in the opposite direction to the latching-in direction, with the latching connection by the hook elements (10, 12), which latch in elastically, being released.

13. Adapter according to one of Claims 1 to 12,
**characterized in that**
a latching lip (27) is provided for connection of the adapter strip (2) to the mounting rail (3') in the lateral position, and an opening (36) is formed in the adapter strip (2), for insertion of a tool in order to release the latching connection by bending the latching lip (27).

14. Adapter according to Claim 13,
**characterized in that**
a free end of the latching lip (27) projects into the opening (36).

15. Adapter according to one of Claims 7 to 14,
**characterized in that**
the adapter strip (2) ends flush with the connecting strip module (1) at at least one longitudinal end.

## Revendications

1. Adaptateur pour l'installation de modules de connexion (1) dans des dispositifs de distribution électrique, ledit adaptateur (2) comprenant des moyens pour la liaison avec au moins un module (1) de ce type ainsi que des moyens pour la liaison en avec un rail porteur à profil en chapeau (3), lesquels comportent des éléments en crochet qui s'enclenchent de façon élastique sur les bordures longitudinales mutuellement opposées du rail porteur à profil en chapeau (3),
**caractérisé en ce que** l'adaptateur est réalisé comme une barrette adaptatrice (2) sous la forme d'un profilé en équerre allongé, et **en ce qu'**il est prévu des éléments en crochet à enclenchement élastique (10, 12, 24-27) pour l'enclenchement de la barrette adaptatrice (2) sur les bordures longitudinales du rail porteur à profil en chapeau (3) à la fois parallèlement et également transversalement au rail porteur à profilé en chapeau (3).

2. Adaptateur selon la revendication 1,
**caractérisé en ce que** l'adaptateur (2) comprend en outre des moyens pour la liaison sélective avec au moins un élément porteur (31, 33) différent du rail porteur à profil en chapeau (3) et utilisé dans des dispositifs distributeurs.

3. Adaptateur selon la revendication 2,
**caractérisé en ce que** l'autre élément porteur est un rail porteur (33) ou une plaque porteuse (31).

4. Adaptateur selon la revendication 3,
**caractérisé en ce que** les moyens de liaison comportent des coupoles (16) qui dépassent de l'adaptateur (2), avec une ouverture de fond (17) pour une liaison vissée de l'adaptateur (2) avec la plaque porteuse (31).

5. Adaptateur selon l'une des revendications 1 à 4,
**caractérisé en ce que** les moyens de liaison comprennent des éléments de liaison (10, 12 ; 23, 25 ; 24, 26) qui sont utilisables dans le cadre de la liaison de l'adaptateur (2) avec différents éléments porteurs (3 ; 33) et/ou avec un élément porteur (3) dans différents agencements vis-à-vis de l'élément porteur (3).

6. Adaptateur selon l'une des revendications 1 à 5,
**caractérisé en ce que** la barrette adaptatrice (2) est réalisée pour la formation d'une barrette de connecteurs à bornes qui comprend au moins un module de barrette de connexion (1, 1').

7. Adaptateur selon la revendication 6,
**caractérisé en ce que** la barrette adaptatrice (2) comprend des emplacements de rupture de consigne (7) pour adapter la longueur de la barrette à des modules de barrettes de connexion (1') de longueurs différentes.

8. Adaptateur selon l'une des revendications 4 à 7,
**caractérisé en ce que** les coupoles (16) sont reliées à une branche (6) du profil en équerre, et les éléments en crochets à enclenchement élastique (10, 12) sont reliés à une autre branche (5).

9. Adaptateur selon la revendication 8,
**caractérisé en ce que** les coupoles (16) sont agencées sur la ligne médiane longitudinale de la branche concernée (6).

10. Adaptateur selon la revendication 8 ou 9,
**caractérisé en ce que** les éléments en crochet à enclenchement élastique (10, 12) sont réalisés à la manière d'un levier basculant avec un ergot d'enclenchement (12), qui engage le rail porteur (3 ; 33) par l'arrière, sur une extrémité du bras de levier.

11. Adaptateur selon la revendication 10,
**caractérisé en ce que** l'ergot d'enclenchement (12) formé à l'extrémité du bras de levier est réalisé en forme de gradins en vue de l'adaptation à des rails porteurs (3 ; 33) d'épaisseurs différentes.

12. Adaptateur selon l'une des revendications 1 à 11,
**caractérisé en ce qu'**il est prévu des butées (14) qui empêchent un déplacement de la barrette adaptatrice (2) transversalement au rail porteur (3 ; 33) avec détachement de la liaison à enclenchement par les éléments en crochets à enclenchement élastique (12, 10) à l'encontre de la direction d'enclenchement.

13. Adaptateur selon l'une des revendications 1 à 12,
**caractérisé en ce que**, pour la liaison de la barrette adaptatrice (2) en position transversale avec le rail porteur (3'), il est prévu une lèvre d'enclenchement (27) et une ouverture (36) est formée dans la barrette adaptatrice (2) pour introduire un outil afin de détacher la liaison enclenchée, par déformation de la lèvre d'enclenchement (27).

14. Adaptateur selon la revendication 13,
**caractérisé en ce qu'**une extrémité libre de la lèvre d'enclenchement (27) pénètre dans l'ouverture (36).

15. Adaptateur selon l'une des revendications 7 à 14,
**caractérisé en ce que** la barrette adaptatrice se raccorde à au moins une extrémité longitudinale en affleurement avec le module de barrette de connexion (1).
